# EUROPEAN PATENT SPECIFICATION

(11) **EP 2 221 335 B1**
(45) Date of publication and mention of the grant of the patent: **17.07.2013**
(21) Application number: 08849441.4
(22) Date of filing: 07.11.2008
(51) Int. Cl.: C08J 5/04, B32B 5/00, C03C 13/00, D03D 1/00, D03D 15/12

(54) **NONFLAMMABLE TRANSPARENT FIBER-REINFORCED RESIN SHEET AND PROCESS FOR PRODUCTION OF THE SAME**
NICHT ENTFLAMMBARES TRANSPARENTES FLÄCHENGEBILDE AUS FASERVERSTÄRKTEM HARZ UND HERSTELLUNGSVERFAHREN DAFÜR
FEUILLE DE RÉSINE RENFORCÉE DE FIBRES TRANSPARENTE ET ININFLAMMABLE ET PROCÉDÉ POUR LA PRODUIRE

(30) Priority: 13.11.2007 JP 2007294745
(43) Date of publication of application: 25.08.2010
(73) Proprietor: Nitto Boseki CO., LTD., Fukushima 960-8161 (JP)
(72) Inventor: YOSHIDA, Masayoshi, Fukushima-shi Fukushima 960-8161 (JP); NAGANUMA, Nobuaki, Fukushima-shi Fukushima 960-8161 (JP)
(74) Representative: Vossius & Partner
(86) International application number: PCT/JP2008/070332
(87) International publication number: WO 2009/063809

(56) References cited:
- EP-A1- 0 578 120
- WO-A1-00/78860
- WO-A1-03/079763
- WO-A2-01/98064
- DE-A1-102004 061 767
- DE-U1- 29 822 095
- JP-A- 2003 073 973
- JP-A- 2003 276 113
- JP-A- 2007 224 270
- US-A- 3 274 136
- US-A- 6 103 803

## Description

### Technical Field

The present invention relates to a fiber-reinforced resin sheet and to a method for producing the same.

### Background Art

Fiber-reinforced resin sheets, obtained by reinforcing a resin with glass fibers, are employed as building materials because they release less heat even in high-temperature conditions such as fire. A sheet comprising a glass fiber woven fabric impregnated with a vinyl chloride resin is described in Patent document 1, as a sheet that meets the criteria for heat release testing established by the Building Standards Act. Also, a sheet that has transparency and meets the criteria for heat release testing established by the Building Standards Act is described in Patent document 2.
[Patent document 1] Japanese Unexamined Patent Application Publication No. 2003-276113
[Patent document 2] Japanese Unexamined Patent Application Publication No. 2005-319746

DE 10 2004 061 767 A1 describes a thermoplastic composite material (A) comprising a thermoplastic polymer as matrix, which is strengthened with polyvinyl alcohol fibers. Also disclosed are a molded part from (A), and the preparations of (A).

WO 03/079763 A1 describes a process for manufacturing a composite comprising, in any order or concurrently, (a) shearing cellulosic or lignocellulosic fiber to the extent that its internal fibers are substantially exposed to form texturized cellulosic or lignocellulosic fiber, (b) densifying the texturized fiber, and (c) combining the cellulosic or lignocellulosic fiber with a resin; and a composite manufactured by this process.

WO 01/98064 A2 describes a method for improving fiber length retention during continuous manufacture of a reinforced composite article comprising a) providing one or more layers of a wet-laid mat impregnated with at least one particulate thermoplastic polymer, and b) molding the one or more layers of wet-laid mat in a continuous laminating process to form a fiber-reinforced composite. It further describes a composite laminate formed by this method, having a length-weighted average fiber length of from 10 mm to 32 mm, wherein the particulate thermoplastic polymer is polyvinyl chloride and the reinforcing material are long glass fibers ranging from 3.2 mm to 50.8 mm in length.

WO 00/78860 A1 describes a composition comprising (A) from 5 to 90 wt.-% of at least one substantially random interpolymer prepared by polymerizing one or more a-olefin monomers with one or more vinyl or vinylidene aromatic monomers, and optionally with other polymerizable ethylenically unsaturated monomer(s); (B) from 10 to 94.9 wt.-% of at least one filler selected from talc, calcium carbonate, glass fibers, marble dust, cement dust, clay, feldspar, silica or glass, fumed silica, alumina, magnesium oxide, antimony oxide, zinc oxide, barium sulfate, aluminum silicate, calcium silicate, titanium dioxide, titanates, glass microspheres and chalk; (C) from 0.01 to 5 wt.-% of an organic acid or salt thereof; and (D) from 0.1 to 10 wt.-% of at least one initiator or at least one coupling agent selected from organic peroxides, silanes, titanates, zirconates, multifunctional vinyl compounds and organic azides; wherein the amounts of (A), (B), (C) and (D) are based on the total weight of (A), (B), (C) and (D).

US Patent 6,103,803 describes a filled polymer composition comprising (A) from 5 to 90 percent of one or more thermoplastic substantially random interpolymers prepared by polymerizing one or more alpha-olefin monomers with one or more vinylidene aromatic monomers and/or one or more hindered aliphatic or cycloaliphatic vinylidene monomers, and optionally with other polymerizable ethylenically unsaturated monomer(s), (B) from 10 to 95 percent of one or more inorganic fillers, the amounts of (A) and (B) being based on the total weight of (A) and (B), wherein the inorganic filler is selected from alumina trihydrate, marble dust, cement dust, clay, feldspar, silica, glass, fumed silica, alumina, magnesium oxide, magnesium hydroxide, antimony oxide, zinc oxide, aluminum silicate, calcium silicate, titanium dioxide, titanates, glass microspheres, and chalk.

DE 298 22 095 U1 describes a polymer film comprising at least one layer of a metallocene catalyzed polyolefin, and usual additives. A reinforcing layer of glass fiber mat can be present between two layers of polyolefin.

EP 0 578 120 A1 describes an integrally molded composite article comprising a ring-opened norbomene-type polymer matrix and at least one substrate element, said norbomene-type polymer is derived from at least one norbomene-type monomer, and said substrate element comprises an ethylene-vinyl chloride copolymer, wherein said norbomene-type monomer is bulk polymerized in a mold in contact with a surface of said ethylene-vinyl chloride copolymer of said substrate element. Said norbomene-type polymer matrix can further comprises a reinforcing filler.

US Patent 3,274,136 describes a process for preparing reinforced resin laminates comprising the steps of uniformly coating unsized glass fibers with a homogenous polymeric binder composed of 50 to 80 weight percent of a vinyl chloride polymer and 50 to 20 weight percent of a plasticizer, impregnating said coated reinforcing material with a polymerizable fluid composition comprising a vinyl chloride polymer and further components, and curing the composition by polymerization.

### Disclosure of the Invention

### Problems to be Solved by the Invention

Transparent vinyl chloride sheets are currently used as partitioning sheets for partitioning of compartments in factories and the like, but partitioning sheets used in factories may be directly exposed to sparks, and therefore preferably have not only a less heat release property (nonflammability), but also a burn-resistant property (combustion resistance). They are also preferably transparent as well. However, the sheet described in Patent document 1 has low transparency while the sheet described in Patent document 2 does not have sufficient burn-resistant property.

It is therefore an object of the present invention to provide a fiber-reinforced resin sheet having a less heat release property as well as burn-resistance property and transparency, and a method for production of the same.

### Means for Solving the Problems

The present inventors have found that the transparency of a fiber-reinforced resin sheet can be improved if a specific range is used for the glass composition of the glass fiber woven fabric in a fiber-reinforced resin sheet comprising a glass fiber woven fabric impregnated with a resin composition containing vinyl chloride-based resin, and the invention has been completed based on this finding.

Specifically, the invention provides a fiber-reinforced resin sheet comprising a glass fiber woven fabric impregnated with a resin composition containing vinyl chloride-based resin, wherein the glass fiber woven fabric content is 10 - 50 wt% with respect to the total weight of the fiber-reinforced resin sheet, the glass composing the glass fiber woven fabric comprises SiO₂ and at least one of CaO and MgO as a basic composition, the SiO₂, CaO and MgO contents represented by X, Y and Z (wt%) respectively with respect to the total weight of the glass are such that X - (Y + Z) is 40 - 60 wt%, and the fiber-reinforced resin sheet has a haze value of 40% or less, wherein the term "vinyl chloride-based resin" includes polyvinyl chloride and resins having molecular chains composed of a copolymer comprising vinyl chloride as a monomer unit.

Since the glass fiber woven fabric and vinyl chloride-based resin comprised in the fiber-reinforced resin sheet have a burn-resistant property, the fiber-reinforced resin sheet also exhibits a burn-resistant property in addition to its less heat release property. In addition, since the value of X - (Y + Z) is 40 - 60 wt% and the resin composition contains a vinyl chloride-based resin, the haze of the fiber-reinforced resin sheet can be lowered to below 40%, thus minimizing diffusion of light and resulting in excellent transparency. The haze is the ratio of the diffuse transmittance with respect to the total light transmittance. If the value of X - (Y + Z) is less than 40 wt%, the haze will be increased and the transparency of the fiber-reinforced resin sheet reduced. If the value is greater than 60 wt%, production of the glass fiber will be more difficult.

The fiber-reinforced resin sheet of the invention preferably has a total light transmittance of 85% or more. A total light transmittance of 85% or more will allow the opposite side of the sheet to be adequately visible. The total light transmittance is the proportion of light passing through the fiber-reinforced resin sheet to light falling on the fiber-reinforced resin sheet.

The weight per unit area of the resin composition is preferably 10 - 650 g/m². If the weight per unit area of the resin composition is within this range, less heat release property and burn-resistant property of the fiber-reinforced resin sheet will be even more excellent. It will also be possible to prevent the phenomenon of raised patterns in the glass fiber woven fabric or poor impregnation of the resin composition into the glass fiber woven fabric, so that a transparency of the fiber-reinforced resin sheet can be obtained more easily.

The weight per unit area of the glass fiber woven fabric is preferably 10 - 200 g/m². A weight per unit area of 10 g/m² or more will result in sufficiently high strength for the glass fiber woven fabric. Also, a weight per unit area of 200 g/m² or less will allow the thickness of the glass fiber woven fabric to be reduced, so that transparency of the fiber-reinforced resin sheet can be obtained more easily.

The resin composition preferably contains a plasticizer. Including a plasticizer will impart softness to the fiber-reinforced resin sheet and help prevent wrinkles.

The fiber-reinforced resin sheet can be produced by a method for producing a fiber-reinforced resin sheet comprising an impregnating step of impregnating a glass fiber woven fabric with a solution containing a resin composition and an organic solvent, and a volatilizing step of volatilizing the organic solvent off.

It is preferable that the fiber-reinforced resin sheet has a construction wherein a reinforcing fiber layer comprising a glass fiber woven fabric impregnated with a resin composition is sandwiched between resin layers composed of the same resin composition or a different one, and the thickness of the resin layers is 40 - 200 µm. The presence of resin layers on both sides of the reinforcing fiber layer will improve the surface smoothness of the fiber-reinforced resin sheet. If the resin layer thickness is less than 40 µm, the nodes where the warp yam and weft yarn of the glass fiber woven fabric cross may be raised on the surface of the fiber-reinforced resin sheet resulting in lower surface smoothness, while if the resin layer thickness is greater than 200 µm the burn-resistant property of the fiber-reinforced resin sheet will tend to be reduced.

Such a fiber-reinforced resin sheet can be produced by a method for producing a fiber-reinforced resin sheet comprising an impregnating step of impregnating a glass fiber woven fabric with a solution containing a resin composition and an organic solvent, a volatilizing step of volatilizing the organic solvent is volatilized off, and a forming step of forming resin layers with thicknesses of 40-200 µm on both sides of the resin composition-impregnated glass fiber woven fabric obtained in the volatilizing step.

The solution containing the resin composition and organic solvent has low viscosity and therefore readily infiltrates in the gaps between the glass fiber bundles. It is thus possible to increase impregnation of the resin composition into the glass fiber woven fabric. Also, the surface smoothness of the fiber-reinforced resin sheet is improved by laminating formation of the resin layers on both sides of the glass fiber woven fabric.

### Effect of the Invention

According to the invention it is possible to provide a fiber-reinforced resin sheet having a less heat release property as well as a burn-resistant property and transparency. The fiber-reinforced resin sheet of the invention also has excellent softness.

### Brief Description of the Drawings

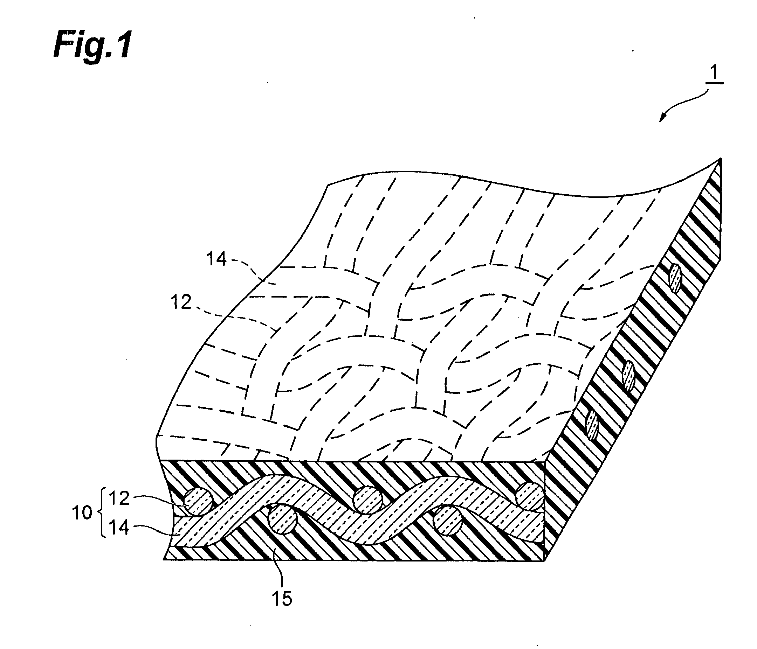

Fig. 1 is a perspective view of a fiber-reinforced resin sheet according to an embodiment of the invention.

### Explanation of Symbols

1: Fiber-reinforced resin sheet, 10: glass fiber woven fabric, 12: warp yam, 14: weft yam, 15: resin composition.

### Best Mode for Carrying Out the Invention

A preferred embodiment of a fiber-reinforced resin sheet and a method for producing the same according to the invention will now be explained in detail, with reference to the accompanying drawings. Throughout the drawings, corresponding elements are indicated by like reference numerals, and are explained only once.

Fig. 1 is a cross-sectional view showing an embodiment of a fiber-reinforced resin sheet of the invention. The fiber-reinforced resin sheet 1 comprises a glass fiber woven fabric 10 composed of warp yam 12 and weft yam 14, impregnated with a resin composition 15. That is, the fiber-reinforced resin sheet 1 comprises the glass fiber woven fabric 10 and resin composition 15, with the resin composition 15 surrounding the glass fiber woven fabric 10 and infiltrating the gaps between the yarns of the glass fiber woven fabric 10. The constituent elements of the fiber-reinforced resin sheet 1 will now be explained in detail.

### (a) Glass fiber woven fabric

The glass fiber woven fabric 10 is obtained by weaving the warp yam 12 and weft yarn 14 (both composed of glass fiber bundles, with the glass fiber bundles being composed of a plurality of glass fiber monofilaments), and it serves as the base fabric material for the fiber-reinforced resin sheet 1. The glass fiber woven fabric 10 content is 10 - 50 wt% with respect to the total weight of the fiber-reinforced resin sheet 1. If the content is less than 10 wt% the burn-resistant property of the fiber-reinforced resin sheet 1 may be reduced, and if the content is greater than 50 wt% the resin may fail to sufficiently impregnate the glass fiber woven fabric, leading to thin spots or whitening, and lowering the surface smoothness or transparency. The glass fiber woven fabric 10 content is more preferably 25 - 35 wt%. This range can further improve the burn-resistant property and transparency of the fiber-reinforced resin sheet 1.

The weight per unit area of the glass fiber woven fabric 10 in the fiber-reinforced resin sheet 1 is preferably 10 - 200 g/m². A weight per unit area of 10 g/m² or more will sufficiently increase the strength for the glass fiber woven fabric 10. Also, a weight per unit area of 200 g/m² or less will allow the thickness of the glass fiber woven fabric 10 to be reduced, so that transparency can be obtained more easily. The weight per unit area of the glass fiber woven fabric 10 is preferably 50 - 150 g/m². To obtain a weight per unit area of 10 - 200 g/m², a single thick glass fiber woven fabric sheet may be used or a plurality of thin glass fiber woven fabrics may be used. When the weight per unit area of 150 g/m² or more is adopted, it is preferred to use a plurality of thin glass fiber woven fabrics from the viewpoint of improving the impregnation property.

The glass which is the material of the glass fiber woven fabric 10 is composed of glass comprising SiO₂ and at least one of CaO and MgO as a basic composition. The SiO₂, CaO and MgO contents with respect to the total weight of the glass, represented by X, Y and Z (wt%) respectively, are such that X - (Y + Z) is 40 - 60 wt%. A value in this formula of less than 40 wt% will result in opaqueness, while a value of greater than 60 wt% will make production of the glass fiber more difficult. The value in this formula is preferably 43 - 57 wt% and more preferably 45 - 52 wt%. This value range can further improve the transparency of the fiber-reinforced resin sheet 1.

The glass may also contain components other than CaO, MgO and SiO₂. As components other than CaO, MgO and SiO₂ there may be mentioned Al₂O₃, Fe₂O₃, Na₂O, TiO₂, Li₂O, K₂O, ZrO₂, B₂O₃, MoO₂, GeO₂, P₂O₅, P₂O₃, V₂O₅, BeO, ZnO, BaO and Cr₂O₃. However, the content of alkali metal oxides in the glass is preferably 1 wt% or less. Controlling the alkali metal oxides content wt% or less can increase the transparency of the fiber-reinforced resin sheet 1.

Any glass having such a glass composition may be used, but preferred examples of glass from the viewpoint of glass production are C-glass, T-glass and NE-glass having the compositions listed in Table 1 below.

**[Table 1]**

| | | C-glass | T-glass | NE-glass |
|---|---|---|---|---|
| Components (wt%) | SiO₂ | 60-67 | 64-66 | 50-60 |
| | B₂O₃ | 0-8 | - | 20-30 |
| | Al₂O₃ | 2-6 | 24-26 | 10-20 |
| | CaO | Total: 10 - 20 | - | 0-6 |
| | MgO | | 9-11 | 0-4 |
| | R₂O | 8-15 | - | 0-0.5 |
| | TiO₂ | - | - | 0.5-5 |
| Properties | | Acid resistance | High strength/high elasticity | Low permittivity |

In the above table, R represents an alkali metal.

T-glass and NE-glass are preferably used among the glasses for superior transparency of the fiber-reinforced resin sheet 1, while NE-glass is more preferably used for particularly superior transparency.

The glass fiber woven fabric 10 is formed by plain weaving warp yam 12 and weft yam 14. The method of weaving the glass fiber woven fabric 10 is not limited to plain weaving, and various weaving methods such as twill weaving, satin weaving, mat weaving and rib weaving may be employed.

The glass fiber woven fabric 10 may be woven with a single type of glass fiber bundle, or it may be woven with two or more different glass fiber bundles. For example, the warp yam 12 and weft yam 14 may be composed of glass with different compositions so long as the value of X - (Y + Z) is in the range of 40 - 60 wt%. For weaving with two or more different glass fiber bundles, the glass fiber bundle yam count and the diameters of the glass fiber monofilaments composing the glass fiber bundles may be either the same or different. For example, the glass compositions of the glass fiber bundles may be the same while the glass fiber bundle yam counts and glass fiber monofilament diameters are different.

The gaps formed between the adjacent warp yarns and between the adjacent weft yarns in the glass fiber woven fabric 10 are preferably 0.5 mm or less and more preferably 0.1 mm or less. Reducing the gaps lowers the air permeability of the glass fiber woven fabric 10 and improves the burn-resistant property of the fiber-reinforced resin sheet 1.

The glass fiber woven fabric 10 is preferably subjected to opening treatment. By opening treatment, the gaps can be narrowed. In addition, opening treatment separates the warp yam 12 and weft yam 14 composing the glass fiber woven fabric 10, thus allowing an overall glass fiber woven fabric 10 to be flatter. Opening treatment can therefore alter the volume and area range occupied by the glass fiber bundles. Furthermore, reducing the thickness of the glass fiber woven fabric 10 can increase the total light transmittance of the fiber-reinforced resin sheet 1.

In order to improve the durability of the fiber-reinforced resin sheet 1, preliminarily the glass fiber woven fabric 10 may be subjected to surface treatment for attachment of an adhesive substance. A silane coupling agent may be used as the adhesive substance. This will improve the interfacial adhesiveness between the glass fiber woven fabric 10 and resin composition 15. The adhesive substance exhibits an effect even when attached in a small amount on the surfaces of the warp yam 12 and weft yam 14, and therefore has virtually no effect on the optical transparency of the glass fiber woven fabric 10.

### (b) Resin composition

The resin composition 15 contains a vinyl chloride-based resin. Here, "vinyl chloride-based resin" includes not only polyvinyl chloride but also resins having molecular chains composed of a copolymer comprising vinyl chloride as a monomer unit. Monomers that are copolymerizable with vinyl chloride include vinylidene chloride, vinyl acetate, ethylene, propylene, acrylonitrile, maleic acid and its esters, acrylic acid and its esters, and methacrylic acid and its esters.

The resin composition 15 preferably contains a plasticizer. Containing a plasticizer can improve the softness of the fiber-reinforced resin sheet 1 and help prevent wrinkles. The plasticizer may be any one that is compatible with the vinyl chloride-based resin described above. Such plasticizers include, for example, phthalic acid esters, aliphatic dibasic acid esters, phosphoric acid esters, trimellitic acid esters, glycol esters, epoxidated esters, citric acid esters, tetra-n-octyl citrate, polypropylene adipate, sulfonamides and other polyester-based plasticizers. Phthalic acid esters include, for example, dimethyl phthalate, diethyl phthalate, dibutyl phthalate, di-n-octyl phthalate, diisodecyl phthalate, diisononyl phthalate, butylbenzyl phthalate and phthalic acid esters of approximately C11-13 higher alcohols. Aliphatic dibasic acid esters include, for example, dibutyl adipate, di-n-hexyl adipate and dibutyl sebacate. Phosphoric acid esters include, for example, tributyl phosphate, tri-2-n-ethylhexyl phosphate, tricresyl phosphate and triphenyl phosphate. Trimellitic acid esters include, for example, tri-2-ethylhexyl trimellitate and tributyl trimellitate. Glycol esters include, for example, pentaerythritol esters and diethyleneglycol benzoate. Epoxidated esters include, for example, epoxidated soybean oil and epoxidated linseed oil. Citric acid esters include, for example, acetyltributyl citrate, acetyltrioctyl citrate and tri-n-butyl citrate. These plasticizers may be used alone or as combinations of two or more.

It is preferable that the mixing proportion for the plasticizer is 5-30 parts by weight with respect to 100 parts by weight of the vinyl chloride-based resin. A mixing proportion of 5 parts by weight or more will tend to increase the softness of the fiber-reinforced resin sheet 1 compared to less than 5 parts by weight. If the plasticizer mixing proportion is 30 parts by weight or less, the vinyl chloride-based resin content in the resin composition 15 will be higher than when it is greater than 30 parts by weight, and the burn-resistant property of the fiber-reinforced resin sheet 1 will thus tend to be improved. The plasticizer mixing proportion is more preferably 10 -20 parts by weight. Controlling the mixing proportion within this range will further increase the softness and further improve the burn-resistant property of the fiber-reinforced resin sheet 1. Addition of a plasticizer to the resin composition 15 may be omitted depending on the purpose of the fiber-reinforced resin sheet 1.

The resin composition 15 may also contain additives such as flame retardants, ultraviolet absorbers, fillers and antistatic agents in addition to the plasticizer.

The weight per unit area of the resin composition 15 in the fiber-reinforced resin sheet 1 is preferably 10 - 650 g/m². A resin composition 15 weight of 10 g/m² or more will help prevent phenomena such as raised patterns on the glass fiber woven fabric 10 or whitening of the resin due to poor impregnation. In addition, controlling the resin composition 15 weight of 650 g/m² or less will increase the proportion of glass fiber woven fabric 10 in the fiber-reinforced resin sheet 1, thus burn-resistance property of the fiber-reinforced resin sheet 1 will be improved. The weight of the resin composition 15 is more preferably 50 - 200 g/m². This range can further improve the surface smoothness of the fiber-reinforced resin sheet 1.

The total light transmittance of the fiber-reinforced resin sheet 1 is preferably 85% or more, and more preferably 90% or more. Such transmittance will allow sufficient light passing, thus improving the transparency of the fiber-reinforced resin sheet 1.

The haze of the fiber-reinforced resin sheet 1 is 40% or less. A haze of 40% or less will result in excellent transparency without diffusion of light falling on the fiber-reinforced resin sheet. The haze is preferably 20% or less. This will eliminate cloudiness and further improve the transparency of the fiber-reinforced resin sheet 1.

It is preferable that the fiber-reinforced resin sheet has a construction wherein a reinforcing fiber layer comprising the glass fiber woven fabric impregnated with the resin composition is sandwiched between resin layers composed of the same resin composition or a different resin. Specifically, it is preferable that the resin layer is formed on both sides of the resin composition-impregnated glass fiber woven fabric. Forming the resin layer on both sides of the resin composition-impregnated glass fiber woven fabric will provide a resin layer on the surface of the fiber-reinforced resin sheet, thereby improving the surface smoothness. It is preferable that the resin layer contains no glass fiber woven fabric and the thickness of the resin layer is 40 - 200 µm. This will further improve the surface smoothness of the fiber-reinforced resin sheet. If the thickness of the resin layer is less than 40 µm, the glass fiber woven fabric will tend to have a raised pattern, thus lowering the surface smoothness of the fiber-reinforced resin sheet. If the resin layer thickness is greater than 200 µm, the distance from the fiber-reinforced resin sheet surface to the glass fiber woven fabric will be increased, thus tending to lower the burn-resistance of the fiber-reinforced resin sheet. The thickness of the resin layer is more preferably 50 - 100 µm. This range can further improve the surface smoothness of the fiber-reinforced resin sheet while maintaining its burn-resistant property.

The material of the resin composing the resin layer may be the same as or different from the resin composition composing the reinforcing fiber layer, but from the viewpoint of improving the transparency of the fiber-reinforced resin sheet, the difference between the refractive index of the resin composing the resin layer and the refractive index of the resin composition composing the reinforcing fiber layer is preferably 0.01 or less. Also, the material of the resin composing the resin layer is preferably soft vinyl chloride from the viewpoint of improving the blocking resistance, softness and weather resistance. A flame retardant, plasticizer, antistatic agent, ultraviolet absorber, stabilizer or the like may also be added to the resin composing the resin layer.

### [Method for producing the fiber-reinforced resin sheet]

A method for producing the fiber-reinforced resin sheet 1 will now be described. The method for producing the fiber-reinforced resin sheet 1 comprises an impregnation step of impregnating the glass fiber woven fabric 10 with a solution containing the resin composition 15 and an organic solvent, and a volatilization step of volatilizing the organic solvent off.

First, the resin composition 15 is dissolved in an organic solvent to prepare a solution. The organic solvent used is not particularly restricted and may be any one that can dissolve the vinyl chloride-based resin in the resin composition 15. As examples there may be mentioned methyl ethyl ketone, methyl cellosolve and acetone, any of which may be used alone or in combinations of two or more. For dissolution of the resin composition 15 in the organic solvent, the procedure and conditions may be appropriately set according to the type of organic solvent used and the type of resin composition 15. If necessary, the insoluble components may be removed by filtration.

The solution containing the resin composition 15 and organic solvent is then impregnated into the glass fiber woven fabric 10, either directly or after appropriate concentration or dilution. This production method improves the impregnation property since the viscosity is lowered by dissolution of the resin composition 15 in the organic solvent. The method for impregnating the solution into the glass fiber woven fabric 10 may be, for example, a method in which the glass fiber woven fabric 10 is immersed in the solution, or a method in which the solution is coated onto the glass fiber woven fabric 10. The solution containing the resin composition 15 and organic solvent covers the glass fiber woven fabric 10 and infiltrates into the gaps formed between the warp yam 12 and weft yam 14. Next, the solution-impregnated glass fiber woven fabric 10 is dried for volatilization of the organic solvent, to obtain a glass fiber woven fabric with the resin composition 15 infiltrating the gaps between the glass fiber bundles, as a fiber-reinforced resin sheet 1.

The method for producing the fiber-reinforced resin sheet having a construction wherein a reinforcing fiber layer, comprising the glass fiber woven fabric impregnated with the resin composition, is sandwiched between resin layers, also includes a forming step of forming resin layers with thicknesses of 40 - 200 µm on both sides of the resin composition-impregnated glass fiber woven fabric, in addition to the steps described above. The resin layer is formed by bonding a sheet comprising the resin composing the resin layer (preferably soft vinyl chloride) to the resin composition-impregnated glass fiber woven fabric. A 40-200 µm-thick sheet comprising the resin composing the resin layer may be attached to both sides of the resin composition-impregnated glass fiber woven fabric obtained in the steps described above, and bonded therewith by heating and pressing to obtain a fiber-reinforced resin sheet having a construction with the reinforcing fiber layer sandwiched by the resin layers. However, the method for forming the resin layers is not limited to this method, and other methods may be used, for example, coating the uncured resin onto the resin composition-impregnated glass fiber woven fabric and then curing.

### Examples

Preferred examples of the invention will now be described in greater detail, with the understanding that the invention is not limited to the examples.

### (Example 1)

### [Fabrication of glass fiber woven fabric]

A glass fiber woven fabric was fabricated using 22.4 tex glass fiber bundles as the warp yam and weft yam, which were made of NE-glass having the glass composition listed in Table 2, by plain weaving to a woven density of 60 yams/25 mm for the warp yam and a woven density of 58 yams/25 mm for the weft yam, after which it was subjected to thermal deoiling and surface treatment with methacryloxypropyltrimethoxysilane, and then opening treatment. The weight of the obtained glass fiber woven fabric was 100 g/m², the thickness was 85 µm, the air permeability was 6 cm³/cm²/s, and the gaps between the adjacent warp yarns and adjacent weft yarns were 0.05 mm.

### [Fabrication of fiber-reinforced resin sheet]

To 100 parts by weight of a vinyl chloride resin (trade name: KANEBILAC, by Kaneka Corp.) composed mainly of a copolymer of vinyl chloride and vinyl acetate there was added 15 parts by weight of dibutyl phthalate as a plasticizer, and a solution was prepared by diluting with 75 parts by weight of methyl ethyl ketone. The solution was impregnated into the glass fiber woven fabric and dried at 120°C to volatilize off the methyl ethyl ketone, thus obtaining a resin composition-impregnated glass fiber woven fabric. A transparent soft vinyl chloride sheet (trade name: ARTRON GX446 V6 by Mitsubishi Chemical Corp. MKV) with a thickness of 80 µm was attached to both sides of the resin composition-impregnated glass fiber woven fabric, and the surface was heated and pressed with a hot press at 110°C for lamination to obtain a fiber-reinforced resin sheet. The obtained fiber-reinforced resin sheet had a weight of 350 g/m². The resin composition was impregnated into the glass fiber woven fabric at 250 g/m² (containing the soft vinyl chloride sheet), and the glass fiber woven fabric content was 29 wt% with respect to the total weight of the fiber-reinforced resin sheet.

### (Example 2)

A fiber-reinforced resin sheet was obtained in the same manner as Example 1, except that T-glass having the glass composition shown in Table 2 was used as the glass for the glass fiber woven fabric.

### (Example 3)

A fiber-reinforced resin sheet was obtained in the same manner as Example 1, except that butylbenzyl phthalate was used instead of dibutyl phthalate as the plasticizer added to the resin composition.

### (Example 4)

The same type of glass fiber woven fabric as Example 1 was used. 15 parts by weight of dibutyl phthalate was added as a plasticizer to 100 parts by weight of a vinyl chloride resin (trade name: KANEBILAC by Kaneka Corp.) composed mainly of a copolymer of vinyl chloride and vinyl acetate, the mixture was diluted with 75 parts by weight of methyl ethyl ketone to prepare a solution, and the glass fiber woven fabric was impregnated with the solution and dried at 120°C to volatilize off the methyl ethyl ketone and obtain a fiber-reinforced resin sheet comprising the glass fiber woven fabric impregnated with the resin composition. The weight of the fiber-reinforced resin sheet was 250 g/m², and the glass fiber woven fabric content was 40 wt% with respect to the total weight of the fiber-reinforced resin sheet.

### (Comparative Example 1)

A fiber-reinforced resin sheet was obtained in the same manner as Example 1, except that E-glass having the glass composition shown in Table 2 was used as the glass for the glass fiber woven fabric.

### (Comparative Example 2)

A solution of 100 parts by weight of a vinyl ester resin (trade name: SSP-06P by Showa HighPolymer Co., Ltd.) diluted with 75 parts by weight of methyl ethyl ketone was impregnated into a glass fiber woven fabric in the same manner as Comparative Example 1 and dried at 120°C to volatilize off the methyl ethyl ketone to obtain a fiber-reinforced resin sheet. The weight of the fiber-reinforced resin sheet was 250 g/m², and the glass fiber woven fabric content was 40 wt% with respect to the total weight of the fiber-reinforced resin sheet.

Table 2 shows the glass compositions of each of the glass fiber woven fabrics in units of wt% and the resin compositions in units of parts by weight.

**[Table 2]**

| | | | Example 1 | Example 2 | Example 3 | Example 4 | Comp. Ex. 1 | Comp. Ex. 2 |
|---|---|---|---|---|---|---|---|---|
| Glass composition of glass fiber woven fabric (wt%) | | SiO₂ | 53 | 65 | 53 | 53 | 55 | 55 |
| | | Al₂O₃ | 15 | 25 | 15 | 15 | 14 | 14 |
| | | CaO | 2 | - | 2 | 2 | 23 | 23 |
| | | MgO | 2 | 10 | 2 | 2 | 1 | 1 |
| | | R₂O | 0.2 | 0.1 | 0.2 | 0.2 | 0.6 | 0.6 |
| | | B₂O₃ | 25 | - | 25 | 25 | 6 | 6 |
| | | TiO₂ | 3 | - | 3 | 3 | 0.3 | 0.3 |
| | | SiO₂-(CaO+MgO) | 49 | 55 | 49 | 49 | 31 | 31 |
| Resin composition (parts by wt.) | Main components of resin | Vinyl chloride resin (KANEBILAC) | 100 | 100 | 100 | 100 | 100 | - |
| | | Vinyl ester resin (SSP-06P) | - | - | - | - | - | 100 |
| | Plasticizers | Butylbenzyl phthalate | - | - | 15 | - | - | - |
| | | Dibutylbenzyl phthalate | 15 | 15 | - | 15 | 15 | - |
| Organic solvent (parts by wt.) | | Methyl ethyl ketone | 75 | 75 | 75 | 75 | 75 | 75 |

### [Evaluation of fiber-reinforced resin sheets]

### (a) Evaluation of burn resistance (combustion resistance)

The fiber-reinforced resin sheets of Examples 1-4 and Comparative Examples 1 and 2 were subjected to a combustion test according to JIS L1091 A-1 (45° Microburner method), and the burn resistance of each fiber-reinforced resin sheet was evaluated. Specifically, a test piece of the fiber-reinforced resin sheet was heated with the burner for 1 minute, and the afterflame time (sec) and afterglow time (sec) were measured. Approximately the same measured values were obtained in the examples and comparative examples. A separate test piece was also subjected to a test in which flame was removed 3 seconds after flaming, and the afterflame time (sec), afterglow time (sec) and combustion area (cm²) were measured. Heat resistance was exhibited and approximately the same measured values were obtained in all of the examples except Comparative Example 2. The afterflame time is the length of time the test piece continues to generate flame from the end of heating; the afterglow time is the length of time a red heat is continuously being observed from the end of heating or after the flame in the test piece has disappeared, and the combustion area is the total area of the section destroyed by combustion or thermal decomposition.

The criteria for flameproof performance established by the Ordinance for Enforcement of the Fire Service Act, Article 4, Section 3 prescribe an afterflame time of within 3 seconds, an afterglow time of within 5 seconds and a combustion area of within 30 cm² after removal of the flame 3 seconds after flaming. That is, the fiber-reinforced resin sheets of Examples 1-4 and Comparative Example 1 met the criteria for flameproof performance and thus exhibited burn resistance.

### (b) Evaluation of less heat release (nonflammability)

The fiber-reinforced resin sheets of Examples 1-4 and Comparative Examples 1 and 2 were subjected to a heat release test, and the less heat release property of each fiber-reinforced resin sheet was evaluated. Specifically, a radiation heater was used for irradiation of the surface of the fiber-reinforced resin sheet, to provide radiant heat of 50 kW/m² to the fiber-reinforced resin sheet. The gross calorific value of the fiber-reinforced resin during 20 minutes after the start of heating was measured. Also, the time that the heat value of the fiber-reinforced resin has exceeded 200 kW/m² was measured within the 20 minutes after heating was started. Examples 1-3 and Comparative Example 1, which had equivalent resin contents with respect to the fiber-reinforced resin sheet, all exhibited similar measured values, and Example 4 and Comparative Example 2, which had lower resin contents with respect to the fiber-reinforced resin sheet, exhibited satisfactory measured values. The outer appearances of the fiber-reinforced resin sheets were also visually observed after the heat release test. An evaluation of "Satisfactory" was assigned when no cracks or holes were seen passing through the sample after the heat release test. All of the test pieces were satisfactory.

The criteria for a noncombustible material according to the Building Standards Act specify a gross calorific value of 8 MJ/m² or less and a heat value not in excess of 200 kW/m² continuing for 10 seconds or longer in heat release testing, and no cracking or holes passing through the sample after heat release testing. That is, the fiber-reinforced resin sheets of Examples 1-4 and Comparative Examples 1 and 2 met the criteria for noncombustible materials.

### (c) Evaluation of transparency

The transparency of each of the fiber-reinforced resin sheets of Examples 1-4 and Comparative Examples 1 and 2 was evaluated. Specifically, the total light transmittance and diffuse transmittance of the fiber-reinforced resin sheet was measured using an integrating sphere measuring apparatus according to JIS K 7105, and the haze was determined from the values. The fiber-reinforced resin sheets of Examples 1-4 and Comparative Examples 1 and 2 had at least 90% total light transmittance, i.e. good light transmission. Also, the fiber-reinforced resin sheets of Examples 1-4 and Comparative Example 2 has low haze, and thus were confirmed to be transparent. The transparency was particularly superior in Examples 1 and 4 and Comparative Example 2.

### (d) Evaluation of stain resistance and crease resistance

The stain resistance and crease resistance were evaluated by hand contact with each fiber-reinforced sheet. Staining and creasing were visually examined, an evaluation of "A" was assigned for no staining or creasing, an evaluation of "B" was assigned for staining and creasing that were not notable, and an evaluation of "C" was assigned for staining and creasing that were notable.

The evaluation results for each of the above are shown in Table 3.

**[Table 3]**

| | | | Example 1 | Example 2 | Example 3 | Comp. Ex. 1 | Example 4 | Comp. Ex. 2 |
|---|---|---|---|---|---|---|---|---|
| Combustion resistance | 1 minute heating test | Afterflame time (sec) | 0.9-1.0 | | | | | |
| | | Afterglow time (sec) | 0.6-0.7 | | | | | |
| | Heating test 3 seconds after flaming | Afterflame time (sec) | 2.0-2.2 | | | | | 10 |
| | | Afterglow time (sec) | 1.6-1.8 | | | | | 10 |
| | | Combustion area (cm²) | 22-24 | | | | | 19 |
| Non-flammability | Heat release test (MJ/m²) | | 5.0-5.2 | | | | 3.4 | 2.7 |
| | Time to exceed 200 kW/m² (sec) | | 2.3-2.5 | | | | 0 | 0 |
| | Outer appearance after heat release test | | Satisfactory | | | | | |
| Transparency | Total light transmittance (%) | | 91.5 | 91.5 | 91.8 | 95.8 | 92.0 | 90.4 |
| | Diffuse transmittance (%) | | 4.8 | 32.4 | 31.4 | 76.6 | 4.5 | 6.6 |
| | Haze (%) | | 5.2 | 35.4 | 34.2 | 80.0 | 4.9 | 7.3 |
| Staining resistance/creasing resistance | | | A | A | A | A | B | C |

## Claims

1. A fiber-reinforced resin sheet comprising a glass fiber woven fabric impregnated with a resin composition containing vinyl chloride-based resin, wherein:
the glass fiber woven fabric content is 10 - 50 wt% with respect to the total weight of the fiber-reinforced resin sheet,
the glass composing the glass fiber woven fabric comprises SiO₂ and at least one of CaO and MgO as a basic composition,
the SiO₂, CaO and MgO contents represented by X, Y and Z (wt%) respectively with respect to the total weight of the glass are such that X - (Y + Z) is 40 - 60 wt%, and
the fiber-reinforced resin sheet has a haze value of 40% or less,
wherein the term "vinyl chloride-based resin" includes polyvinyl chloride and resins having molecular chains composed of a copolymer comprising vinyl chloride as a monomer unit.

2. The fiber-reinforced resin sheet according to claim 1, wherein the fiber-reinforced resin sheet has a total light transmittance of 85% or more.

3. The fiber-reinforced resin sheet according to claim 1, wherein the weight per unit area of the resin composition is 10 - 650 g/m².

4. The fiber-reinforced resin sheet according to claim 1, wherein the weight per unit area of the glass fiber woven fabric is 10 - 200 g/m².

5. The fiber-reinforced resin sheet according to claim 1, wherein the resin composition contains a plasticizer.

6. The fiber-reinforced resin sheet according to claim 1, wherein a reinforcing fiber layer comprising the glass fiber woven fabric impregnated with the resin composition is sandwiched between resin layers with thicknesses of 40 - 200 µm composed of the same resin composition or a different resin.

7. A method for producing the fiber-reinforced resin sheet according to claim 1, comprising:
an impregnating step of impregnating a glass fiber woven fabric with a solution containing a resin composition and an organic solvent, and
a volatilizing step of volatilizing the organic solvent off.

8. A method for producing the fiber-reinforced resin sheet according to claim 6, comprising:
an impregnating step of impregnating a glass fiber woven fabric with a solution containing a resin composition and an organic solvent,
a volatilizing step of volatilizing the organic solvent off, and
a forming step of forming resin layers with thicknesses of 40 - 200 µm on both sides of the resin composition-impregnated glass fiber woven fabric obtained in the volatilizing step.

## Patentansprüche

1. Ein Flächengebilde aus faserverstärktem Harz, das ein Glasfasergewebe umfasst, welches mit einer Harzzusammensetzung, die Harz auf Vinylchloridbasis enthält, imprägniert ist, wobei:
der Gehalt an Glasfasergewebe 10 bis 50 Gew.-% in Bezug auf das Gesamtgewicht des Flächengebildes aus faserverstärktem Harz beträgt,
das Glas, welches das Glasfasergewebe bildet, SiO₂ und mindestens eines aus CaO und MgO als Grundzusammensetzung umfasst,
die Gehalte an SiO₂, CaO und MgO, dargestellt durch X, Y und Z (Gew.-%), jeweils in Bezug auf das Gesamtgewicht des Glases so sind, dass
X - (Y + Z) 40 bis 60 Gew.-% betragen, und
das Flächengebilde aus faserverstärktem Harz einen Trübungswert von 40% oder weniger aufweist,
wobei der Ausdruck "Harz auf Vinylchloridbasis" Polyvinylchlorid und Harze, die Molekülketten aufweisen, welche aus einem Copolymer, das Vinylchlorid als Monomereinheit umfasst, gebildet sind, einschließt.

2. Das Flächengebilde aus faserverstärktem Harz gemäß Anspruch 1, wobei das Flächengebilde aus faserverstärktem Harz eine Gesamtlichtdurchlässigkeit von 85% oder mehr aufweist.

3. Das Flächengebilde aus faserverstärktem Harz gemäß Anspruch 1, wobei das Gewicht pro Flächeneinheit der Harzzusammensetzung 10 bis 650 g/m² beträgt.

4. Das Flächengebilde aus faserverstärktem Harz gemäß Anspruch 1, wobei das Gewicht pro Flächeneinheit des Glasfasergewebes 10 bis 200 g/m² beträgt.

5. Das Flächengebilde aus faserverstärktem Harz gemäß Anspruch 1, wobei die Harzzusammensetzung einen Weichmacher enthält.

6. Das Flächengebilde aus faserverstärktem Harz gemäß Anspruch 1, wobei eine verstärkende Faserschicht, die das Glasfasergewebe umfasst, welches mit der Harzzusammensetzung imprägniert ist, zwischen Harzschichten mit Dicken von 40 bis 200 µm, die aus der gleichen Harzzusammensetzung oder einem anderen Harz bestehen, eingebettet ist.

7. Ein Verfahren zur Herstellung des Flächengebildes aus faserverstärktem Harz gemäß Anspruch 1, umfassend:
einen Imprägnierschritt des Imprägnierens eines Glasfasergewebes mit einer Lösung, die eine Harzzusammensetzung und ein organisches Lösungsmittel enthält, und
einen Verflüchtigungsschritt des Verflüchtigens des organischen Lösungsmittels.

8. Ein Verfahren zur Herstellung des Flächengebildes aus faserverstärktem Harz gemäß Anspruch 6, umfassend:
einen Imprägnierschritt des Imprägnierens eines Glasfasergewebes mit einer Lösung, die eine Harzzusammensetzung und ein organisches Lösungsmittel enthält,
einen Verflüchtigungsschritt des Verflüchtigens des organisches Lösungsmittels, und
einen Formschritt des Bildens von Harzschichten mit Dicken von 40 - 200 µm auf beiden Seiten des mit der Harzzusammensetzung imprägnierten Glasfasergewebes, welches in dem Verflüchtigungsschritt erhalten wurde.

## Revendications

1. Feuille de résine renforcée par des fibres comprenant un tissu tissé en fibres de verre imprégné avec une composition de résine contenant une résine à base de chlorure de vinyle, dans laquelle :
la teneur en tissu tissé en fibres de verre est de 10 à 50 % en poids par rapport au poids total de la feuille de résine renforcée par des fibres,
le verre composant le tissu tissé en fibres de verre comprend du SiO₂ et au moins un de CaO et MgO en tant que composition de base,
les teneurs en SiO₂, CaO et MgO représentées respectivement par X, Y et Z (% en poids) par rapport au poids total du verre sont telles que X - (Y + Z) est de 40 à 60 % en poids, et
la feuille de résine renforcée par des fibres possède une valeur de voile inférieure ou égale à 40 %,
dans laquelle le terme « résine à base de chlorure de vinyle » comprend un polychlorure de vinyle et des résines ayant des chaines moléculaires composées d'un copolymère comprenant du chlorure de vinyle en tant qu'unité monomère.

2. Feuille de résine renforcée par des fibres selon la revendication 1, dans laquelle la feuille de résine renforcée par des fibres a une transmission totale de lumière supérieure ou égale à 85 %.

3. Feuille de résine renforcée par des fibres selon la revendication 1, dans laquelle le poids par unité de surface de la composition de résine est de 10 à 650 g/m².

4. Feuille de résine renforcée par des fibres selon la revendication 1, dans laquelle le poids par unité de surface du tissu tissé en fibres de verre est de 10 à 200 g/m².

5. Feuille de résine renforcée par des fibres selon la revendication 1, dans laquelle la composition de résine contient un plastifiant.

6. Feuille de résine renforcée par des fibres selon la revendication 1, dans laquelle une couche de fibres de renforcement comprenant le tissu tissé en fibres de verre imprégné avec la composition de résine est intercalé entre des couches de résine ayant des épaisseurs de 40 à 200 µm, composées de la même composition de résine ou d'une résine différente.

7. Procédé de production d'une feuille de résine renforcée par des fibres selon la revendication 1, comprenant :
une étape d'imprégnation consistant à imprégner un tissu tissé en fibres de verre avec une solution contenant une composition de résine et un solvant organique, et
une étape de volatilisation consistant à éliminer par volatilisation le solvant organique.

8. Procédé de production de la feuille de résine renforcée par des fibres selon la revendication 6, comprenant :
une étape d'imprégnation consistant à imprégner un tissu tissé en fibres de verre avec une solution contenant une composition de résine et un solvant organique,
une étape de volatilisation consistant à éliminer par volatilisation le solvant organique, et
une étape de formation consistant à former des couches de résine ayant des épaisseurs de 40 à 200 µm sur les deux côtés du tissu tissé en fibres de verre imprégné par la composition de résine obtenu dans l'étape de volatilisation.
